# EUROPÄISCHE PATENTSCHRIFT

(11) **EP 2 960 395 B1**
(45) Veröffentlichungstag und Bekanntmachung des Hinweises auf die Patenterteilung: **03.05.2017**
(21) Anmeldenummer: 15171203.1
(22) Anmeldetag: 09.06.2015
(51) Int. Cl.: E04D 13/14, E03F 5/04, F16L 5/10, F16L 5/02, H02G 3/08, H02G 3/22

(54) **FLÄCHIGES DICHTELEMENT**
FLAT SEALING ELEMENT
ÉLÉMENT D'ÉTANCHÉITÉ PLAT

(30) Priorität: 24.06.2014 DE 202014102866 U
(43) Veröffentlichungstag der Anmeldung: 30.12.2015
(73) Patentinhaber: Gebrüder Jaeger GmbH, 42369 Wuppertal (DE)
(72) Erfinder: Rittmann, Frank, 42289 Wuppertal (DE)
(74) Vertreter: Müller, Enno

(56) Entgegenhaltungen:
- EP-A1- 0 935 035
- EP-B1- 0 240 764
- DE-A1- 19 544 957
- DE-U1- 20 103 720

## Beschreibung

Die Erfindung betrifft ein flächiges Dichtelement, beispielsweise zum Abdichten eines Rohrdurchgangs, bestehend aus einer ein- oder beidseitig zumindest teilweise von einer eine Außenfläche des Dichtelementes bildenden Vlieslage überdeckten dehnbaren Folienlage und einer durch die Vlieslage und die Folienlage durchgehenden, vorzugsweise mittigen, einen Mittelpunkt aufweisenden Durchgangsöffnung.

Derartige Dichtelemente, die auch als Dichtmanschetten bezeichnet werden, sind in vielfältiger Hinsicht bekannt. Es wird beispielsweise auf die DE 195 44 957 A1 oder die EP 240 764 B1 verwiesen.

Bei den bekannten Dichtelementen ist eine auf der Folienlage aufgebrachte weitere Lage, insbesondere eine wie vorstehend vorausgesetzte Vlieslage, mitunter hindernd im Hinblick auf die gewünschte relativ große Dehnfähigkeit im Randbereich zu der Durchgangsöffnung. Dies um möglichst über eine große Bandbreite von beispielsweise Rohrdurchmessern eine Anpassung an abzudichtende Rohre herstellen zu können. Im Weiteren, ergänzend aber auch unabhängig von vorstehendem Aspekt, wird die Überdeckung der Folienlage mit einer Vlieslage auch insoweit kritisch gesehen, als hierdurch Kapillarwege gegeben sind, die einen Flüssigkeitstransport, insbesondere einen Wassertransport, begünstigen können.

Ausgehend von dem dargelegten Stand der Technik beschäftigt sich die Erfindung mit der Aufgabenstellung, ein flächiges Dichtelement anzugeben, bei dem die Folienlage mit einer Vlieslage überdeckt ist und eine günstige Anpassung der Durchgangsöffnung an unterschiedlich große abzudichtende Rohre oder dergleichen erreicht ist und/ oder bei weitestgehender Überdeckung mit einer Vlieslage gleichwohl der Gefahr eines Flüssigkeitstransports über Kapillarwege entgegengewirkt ist.

Diese Aufgabe ist beim Gegenstand des Anspruches 1 gelöst, wobei darauf abgestellt ist, dass die Folienlage an einer Radialen zu dem Mittelpunkt orientiert einen oder mehrere Dehnbereiche aufweist, in denen die Folienlage freiliegt, d.h. sich jedenfalls frei von einer Bedeckung mit einer die Dehnbarkeit der Folienlage beeinträchtigenden Vlieslage erstreckt, und dass sich in einer Umfangsrichtung, bezogen auf den Mittelpunkt, neben einem Dehnbereich ein Bereich der Folienlage anschließt, in welchem die Folienlage von der damit verbundenen Vlieslage überdeckt ist. Hierdurch ist jedenfalls einseitig bezüglich einer Außenfläche des Dichtelemente die Dehnbarkeit der Folienlage nicht weiter behindert. Bevorzugt liegt die Folienlage in dem Dehnbereich frei, bildet insoweit also einen Teil der Außenfläche des Dichtelementes. Sie kann aber auch von einem Material überdeckt sein, das die verbesserte Dehnbarkeit in dem Dehnbereich, im Vergleich zu dem mit der Vlieslage in einem in Umfangsrichtung benachbarten des Dichtelementes beibehalten lässt oder zumindest weitestgehend beibehalten lässt. Bei einem Umfassen eines Rohres oder dergleichen kann sich das Dichtelement in diesen Dehnbereichen jeweils wesentlich günstiger dehnen als in einem - zweiseitig bzw. in einem Querschnitt gegenüberliegend - von Vlieslagen überdeckten Bereich. Es sind somit ein oder mehrere singuläre Bereiche vorteilhafter erhöhter Dehnbarkeit im Vergleich zu den Bereichen, in denen die Folienlage von Vlieslagen überdeckt ist, geschaffen.

Es kann vorgesehen sein, dass die Durchgangsöffnung einen Öffnungsrand aufweist und dass die Folienlage mit radialem Abstand zu dem Öffnungsrand einen umfangsmäßig durchgehenden Unterbrechungsbereich aufweist, in welchem sie freiliegt, d.h. sich jedenfalls frei von einer Bedeckung mit einer einen Flüssigkeitstransport begünstigenden Vlieslage erstreckt, wobei radial innen zu dem Überdeckungsbereich zumindest auf einem umfangsmäßigen Teil des Unterbrechungsbereiches die Folienlage durch eine Vlieslage, insbesondere eine zur Begünstigung eines Flüssigkeitstransports geeignete Vlieslage überdeckt ist. Hierdurch ist ein flächiges Dichtelement geschaffen bei dem gleichwohl die günstige Überdeckung durch eine Vlieslage im unmittelbaren Manschettenbereich, das heißt, den an den Öffnungsrand der Durchgangsöffnung sich anschließenden Bereich, gegeben ist. Somit kann beispielsweise eine Abdichtungsmasse auch in einem im Einbauzustand gedehnten Bereich des Dichtelementes, im Umfangsbereich zu der Durchgangsöffnung, günstig mit dem Dichtelement verhaftet werden. Gleichwohl ist aber eine Transportbarriere im Hinblick auf eventuell in der Vlieslage transportierte Flüssigkeit oder Feuchtigkeit geschaffen. In den gegenüber dem Unterbrechungsbereich radial äußeren Bereich kann solche Feuchtigkeit oder Flüssigkeit nicht durchdringen.

Die zusammengefasste Lehre der Ansprüche 1 und 2 ist sowohl hinsichtlich der Anpassbarkeit an ein in der Durchgangsöffnung beispielsweise aufzunehmendes Rohr wie auch im Hinblick auf den - möglichst zu verhindernden - Feuchtigkeitstransport vorteilhaft. Der Unterbrechungsbereich kann einen erkennbaren Übergang von einem im Einbauzustand an das Rohr oder dergleichen angepassten Bereich (gedehnten und/ oder gekrümmten Bereich) zu dem übrigen Bereich des Dichtelementes, der beispielsweise im Einbauzustand flach auf der Gebäudedecke aufliegt, schaffen. Die Dehnbereiche können jedenfalls einen Transport in Umfangsrichtung von Feuchtigkeit hindern.

In weiterer Ausgestaltung ist es bevorzugt, dass mehrere Dehnbereiche vorgesehen sind und dass die Dehnbereiche sternförmig zu dem Mittelpunkt verlaufen. Die mehreren Dehnbereiche haben bevorzugt in Umfangsrichtung einen gleichen Abstand zueinander. Die Dehnbereiche sind, dies auch als alternative Beschreibung zu einer Orientierung an einer Radialen zu dem Mittelpunkt, sternförmig und zwar bevorzugt in gleichen Umfangsabständen angeordnet. Somit kann eine, wenn auch örtlich unterschiedliche, gleichförmige Dehnung über den Umfang erreicht werden. Eine streng radiale Ausrichtung zu dem Mittelpunkt der Durchgangsöffnung ist nicht erforderlich, aber möglich. Beispielsweise können fünf oder mehr, bis hin zu 20 oder 30 Dehnbereiche in bevorzugt gleichmäßiger Verteilung über den Umfang vorgesehen sein. Ein solcher Dehnbereich mündet bevorzugt jeweils in den Öffnungsrand, so dass der Öffnungsrand in diesem Bereich durch, jedenfalls einseitig, die Folienlage selbst als Außenfläche gebildet ist.

Die Dehnbereiche können auf beiden Seiten ausgebildet sein. Dies auch bevorzugt kongruent, so dass den auf einer Seite ausgebildeten Dehnbereichen im Querschnitt jeweils ein gleicher auf der anderen Seite unmittelbar gegenüber liegt. Die Folie ist bei dieser Ausgestaltung im Querschnitt also in dem Dehnbereich beidseitig nicht mit einer Vlieslage überdeckt. Bezüglich einer nur einseitigen Ausbildung des oder der Dehnbereiche kann auf der gegenüberliegenden Seite des Dichtelementes auch beispielsweise vollflächig eine Vlieslage vorgesehen sein oder auch die Folie insgesamt freiliegen. Letzteres ist auch die bevorzugte Ausführungsform.

Eine radiale Erstreckung eines Dehnbereiches kann vornehmlich an einem größten Öffnungsmaß der Durchgangsöffnung in Flächenerstreckung des Dichtelementes orientiert sein. Beispielsweise kann die Länge ein Zehntel oder mehr, bis hin zu dem Ein- oder auch Zweifachen des größten Durchmessermaßes der Durchgangsöffnung betragen.

Soweit der genannte Unterbrechungsbereich verwirklicht ist, ist auch bevorzugt, dass einer, mehrere oder alle Dehnbereiche in radialer Richtung vor dem Unterbrechungsbereich enden. Sie können auch in den Unterbrechungsbereich einlaufen.

Bevorzugt ist jedoch insoweit, dass einer, mehrere oder alle Dehnbereiche in radialer Richtung von dem Unterbrechungsbereich durch einen von einer Vlieslage überdeckten Abstandsbereich der Folie getrennt sind. Bevor der Überdeckungsbereich in radialer Richtung erreicht wird, ist also zunächst noch ein umfangsmäßig durchgehender Bereich der Vlieslage verwirklicht.

Der Abstandsbereich ist bevorzugt umlaufend geschlossen ausgebildet. Es gibt über den Umfang dann keine Stelle oder Bereiche, an denen etwa eine Brückenwirkung durch eine Vlieslage oder jedenfalls eine einen Feuchtigkeitstransport begünstigende Lage oder ein vergleichbares Element gegeben wäre.

Darüber hinaus ist auch bevorzugt, dass die Folienlage radial jenseits des Unterbrechungsbereiches vollständig von einer Vlieslage überdeckt ist. Radial jenseits des Unterbrechungsbereiches ist also die vollständige Belegung ein- oder beidseitig der Folienlage gegeben.

Eine Gesamtabmessung des flächigen Dichtelementes, das weiter bevorzugt einen rechteckigen oder quadratischen Grundriss aufweisen kann, kann beispielsweise in der größten Erstreckungsrichtung (die auch eine Diagonale sein kann) das Zweifache oder mehr eines größten Öffnungsmaßes der Durchgangsöffnung in der genannten Flächenerstreckung betragen. Beispielsweise hin bis zum Zehn- oder Zwanzigfachen.

Bezüglich der Folienlage kann es sich werkstoffmäßig beispielsweise um Polyurethan handeln. Auch ein TPE oder ein Gummimaterial kann in Frage kommen.

Bezüglich einer Vlieslage kann es sich beispielsweise um ein Vlies auf Basis auf Polypropylen handeln. Weiter kann es sich auch um eine Vlieslage auf Basis beispielsweise Polyester handeln. Insbesondere radial innen zu dem Unterbrechungsbereich, soweit dieser vorgesehen ist, kann die Vlieslage aus einem günstig mit einer aufzubringenden Abdichtungsmasse sich verbindenden Vlieslage, wie sie etwa durch eine Polyestervlieslage gegeben sein kann, bestehen.

Eine Gesamtdicke des Dichtelementes kann beispielsweise im Bereich von 0,3 bis 1 mm, weiter bevorzugt 0,4 bis 0,6 mm, darüber hinaus bevorzugt 0,55 mm betragen.

Die vor- und nachstehend angegebenen Bandbreiten wie beispielsweise 0,3 bis 1 oder 0,4 bis 0,6 schließen auch, soweit nicht ohnehin schon exemplarisch angegeben, sämtliche Zwischenwerte als offenbart ein, und zwar insbesondere hinsichtlich einer ein- oder mehrfachen Einengung der angegebenen Bereichsgrenzen in Ein-Zehntel-Schritten der jeweiligen kleinsten Zahl, betreffend beide Bereichsgrenzen, also beispielsweise 0,31 bis 1, 0,3 bis 0,99, 0,31 bis 0,99 etc., wobei hinsichtlich ganzzahliger Aufzählungen (etwa bei: 1 bis 20 Dehnbereichen) nur eine Einengung um ganze Zahlen gegeben ist, jedoch bei Bereichen mit Grenzen wie dem Einfachen, Zehnfachen oder Zwanzigfachen die Offenbarung auch das 9,9-Fache, 9,8-Fache oder eben 19,9-Fache, 19,8-Fache, 1,1-Fache, 1,2-Fache etc. als Bereichsgrenzen bzw. singuläre Werte mit einschließt.

Nachstehend ist die Erfindung anhand beigefügter Zeichnungen erläutert, wobei zeigt:
- Figur 1: eine Draufsicht auf eine erste Ausführungsform des Dichtelementes;
- Figur 2: eine Draufsicht auf eine zweite, nicht zur Erfindung gehörende Ausführungsform des Dichtelementes;
- Figur 3: eine Draufsicht auf eine dritte Ausführungsform des Dichtelementes;
- Figur 4: einen Querschnitt durch den Gegenstand gemäß Figur 1, geschnitten entlang der Linie IV-IV;
- Figur 4a: einen Querschnitt gemäß Figur 4, wobei jedoch unterseitig zu den Dehnbereichen, also im Manschettenbereich, die Folie freiliegt;
- Figur 5: einen Querschnitt durch den Gegenstand gemäß Figur 1, geschnitten entlang der Linie V-V;
- Figur 6: einen Querschnitt durch den Gegenstand gemäß Figur 2, der nicht zur Erfindung gehört, geschnitten entlang der Linie VI-VI;
- Figur 6a: einen Querschnitt gemäß Figur 6, ebenfalls nicht zur Erfindung gehörend, wobei unterseitig, radial innen zu dem Unterbrechungsbereich, die Folie vollständig freiliegt; und
- Figur 7: eine perspektivische Darstellung eines Einbaubeispiels für das Dichtelement, wobei dieses teilweise mit einer Abdeckmasse überdeckt ist.

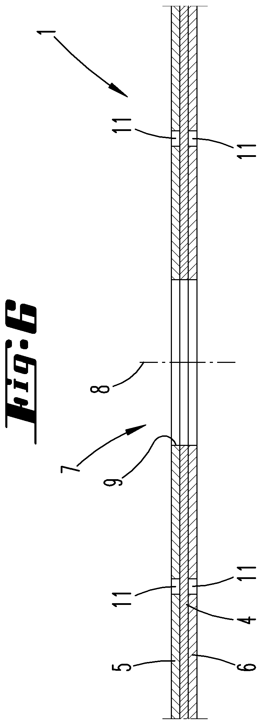

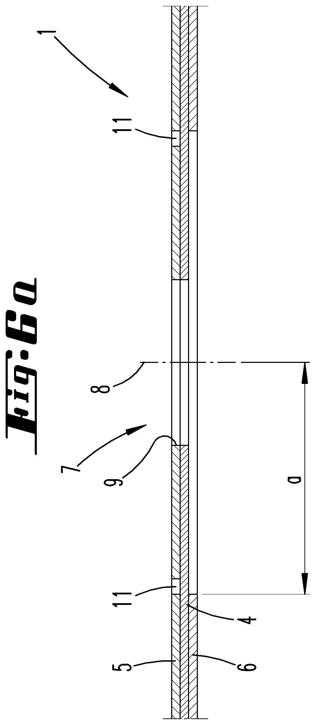

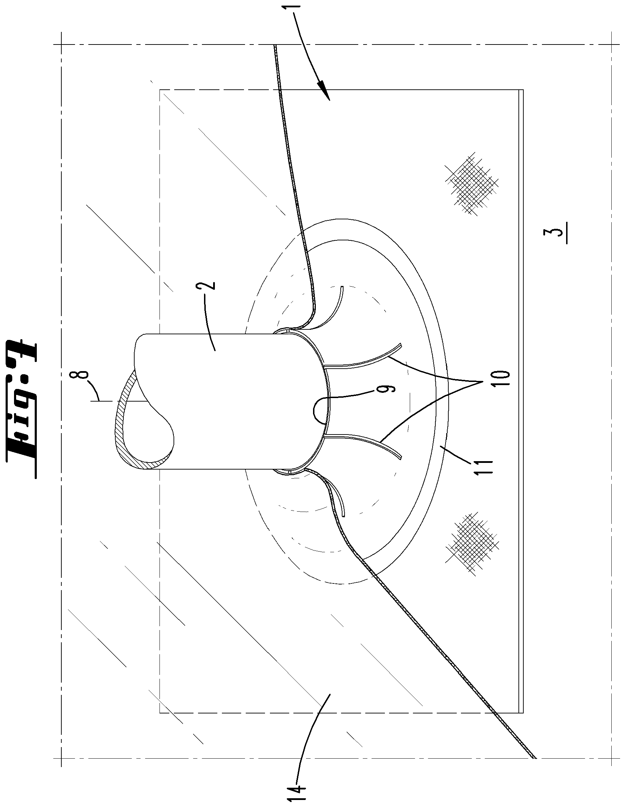

Dargestellt und beschrieben ist ein flächiges Dichtelement 1, das beispielsweise zur Abdichtung gegenüber einem Rohr 2, das etwa eine Gebäudedecke 3 durchsetzt, siehe Figur 7, zur Anwendung kommt.

Das Dichtelement 1 besteht beim Ausführungsbeispiel aus einer Folienlage 4 und beidseitig der Folienlage 4 diese überdeckenden Vlieslagen 5, 6. Die Vlieslagen 5, 6 sind in der nachstehenden im Einzelnen erläuterten Weise unterbrochen ausgebildet, wobei die Folienlage 4 in den genannten Unterbrechungsbereichen nach außen freiliegt und in diesen Bereichen somit die Außenfläche des Dichtelementes 1 bildet. In den weiteren Bereichen ist die Außenfläche jeweils durch die Vlieslagen 5, 6 gebildet.

Die Folienlage 1 und bevorzugt in gewissem Ausmaß auch die Vlieslagen 5, 6 sind elastisch dehnbar ausgebildet.

In dem Dichtelement 1 ist weiter eine Durchgangsöffnung 7 ausgebildet. Bevorzugt ist sie flächenmittig zu dem Dichtelement 1 angeordnet. Diese Durchgangsöffnung 7 dient zum Überstülpen des Dichtelementes 1 beispielsweise über das genannte Rohr 2.

Eine Vlieslage 5, 6 bildet zugleich ersichtlich auch eine Außenseite bzw. Außenfläche des Dichtelementes.

Die Durchgangsöffnung 7 weist weiter einen geometrischen Mittelpunkt 8 auf. Die Durchgangsöffnung 7 kann, wie aus den Ausführungsbeispielen ersichtlich, eine Kreisfläche aufweisen. Sie kann aber auch eine hiervon abweichende, beispielsweise ovale, Gestaltung aufweisen. In letztem Fall ist dann der Flächenmittelpunkt der genannte Mittelpunkt 8, während es bei der Kreisfläche der Kreismittelpunkt ist.

Die Durchgangsöffnung 7 ist zugeordnet einem Öffnungsrand 9 des Dichtelementes.

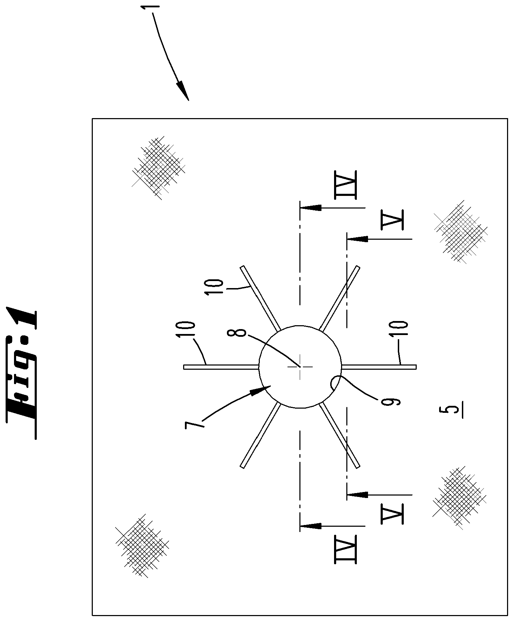

In Bezug auf die Durchgangsöffnung 7 sind, wie zunächst aus Figur 1 ersichtlich, in dem Dichtelement 1 beim Ausführungsbeispiel eine Vielzahl von Dehnbereichen 10 ausgebildet. Ein Dehnbereich 10 zeichnet sich dadurch aus, dass er zumindest einseitig nur durch die Folienlage 4, ohne Überdeckung durch eine Vlieslage 5, 6, gebildet ist.

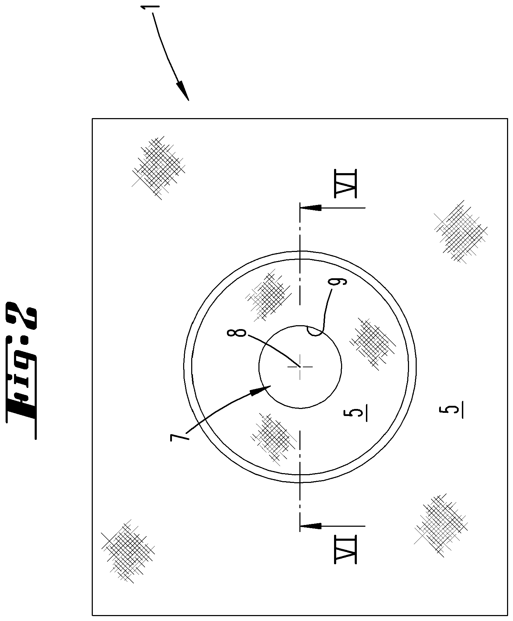

Bei der Ausführungsform der Figur 2, die nicht zur Erfindung gehört, ist kein derartiger Dehnbereich ausgebildet, sondern vielmehr ein Unterbrechungsbereich 11. Der Unterbrechungsbereich 11 unterscheidet sich von einem Dehnbereich 10 insbesondere dadurch, dass er nicht radial oder sternförmig auf den Mittelpunkt 8 der Durchgangsöffnung 7 zu verlaufend gebildet ist, sondern in Umfangsrichtung zu der Durchgangsöffnung 7 bzw. dem Mittelpunkt 8. Radial innen zu dem Unterbrechungsbereich 11 ist - auch bei der Ausführungsform der Figur 2 - wieder eine Überdeckung der Folienlage durch eine Vlieslage 5, 6 gegeben, wie natürlich auch radial außerhalb zu dem Unterbrechungsbereich 11. Bevorzugt verläuft der Unterbrechungsbereich 11 kreisförmig. Weiter bevorzugt mit einem Mittelpunkt, der mit dem Mittelpunkt der Durchgangsöffnung übereinstimmt.

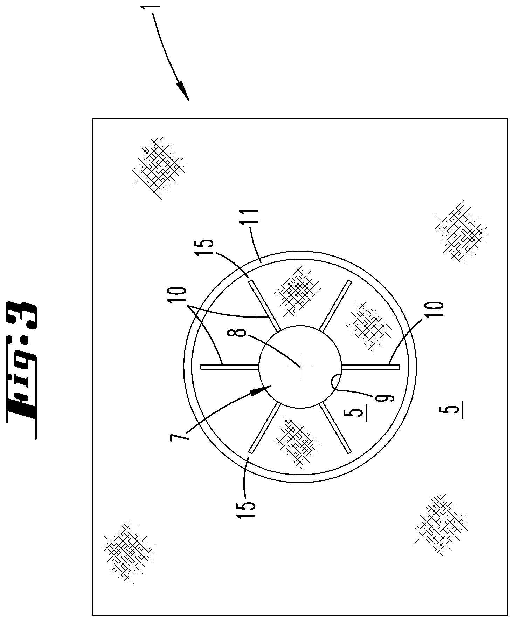

Bei der Ausführungsform der Figur 3 sind die beschriebenen Ausgestaltungen hinsichtlich des Unterbrechungsbereiches und der Dehnbereiche kombiniert vorgesehen. Insofern handelt es sich auch um eine bevorzugte Ausführungsform.

Die Vlieslagen 5, 6 sind auf jeder Seite, obwohl, siehe insbesondere Ausführungsform Figur 2, voneinander vollständig getrennte Bereiche ausgebildet sind, aus einem gleichen Vlies bezüglich einer Seite, weiter bevorzugt auch bezüglich beider Seiten des Dichtelementes 1 ausgebildet. Sie können aber auch unterschiedlich ausgebildet sein. Insbesondere kann der bezüglich einer Vlieslage sich radial innen in Bezug auf den Unterbrechungsbereich 12 befindliche Bereich aus einem abweichenden Vlies gegenüber dem radial außerhalb befindlichen Vlies gebildet sein. Etwa kann radial innen ein saugfreudigeres Vlies ausgebildet sein, als radial außen.

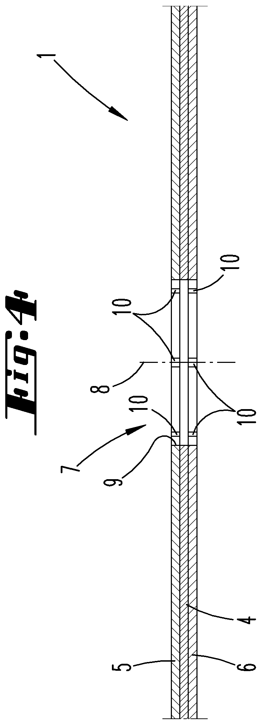

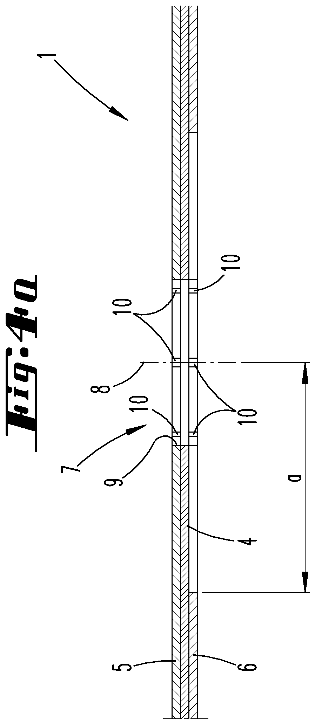

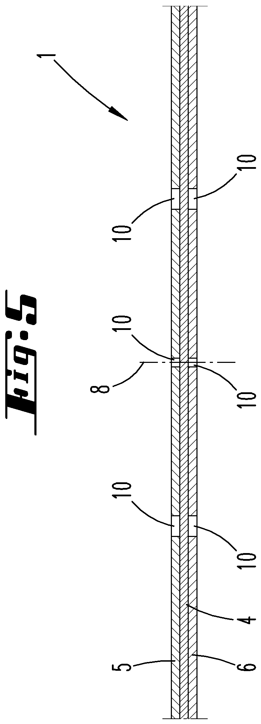

Wie sich aus den Schnittdarstellungen der Figuren 4 bis 6 ergibt, wobei die Schnittdarstellung der Figur 6 nicht zur Erfindung gehört, können bei den Ausführungsbeispielen die Vlieslagen 5, 6 beidseitig der Folienlage 4 vorgesehen sein. Dies auch mit kongruenten Bereichen, in denen die Folienlage 4 freiliegt. Das heißt bezogen auf die Querschnittsdarstellungen insbesondere der Figuren 5 oder 6 sind diese Bereiche, seien es Dehnbereich oder der Unterbrechungsbereich, fluchtend übereinander liegend ausgebildet.

Insbesondere in Bezug auf die Figuren 4a und 6a sind aber auch Ausgestaltungen dargestellt, bei denen die Folienlagen unterschiedlich bezüglich der beiden Seiten gebildet sind. Die Ausführungsform der Figur 6 gehört nicht zur Erfindung, die Ausführungsform der Figur 4 ist bevorzugt.

Die Schnittdarstellung der Figur 4 ist ersichtlich entlang einer Linie vorgenommen, bei welcher kein Dehnbereich 10 gegeben ist. Entsprechend sind die Vlieslagen 5, 6 unterbrechungsfrei durchgehend von einem äußeren Rand 12,13 des Dichtelementes 1 bis zu dem Öffnungsrand 9 der Durchgangsöffnung 7 gegeben.

Im Hinblick auf die Ausführungsform der Figur 1, woraus sich konkret die Schnittdarstellung gemäß Figur 4 ergibt, bilden sich aber in der genannten Schnittdarstellung die dem Öffnungsrand 9 der Durchgangsöffnung 7 zugeordneten Endbereiche der Dehnungsbereiche 10 ab. Eine entsprechende Schnittdarstellung der Figur 2, siehe Figur 6, weist entsprechend diese Mündungen der Dehnbereiche 10 nicht auf.

Die Ausführungsform der Figur 4a entspricht der Ausführungsform der Figur 4, jedoch mit dem Unterschied, dass unterseitig die Folienlage 4 in ihrem der Durchgangsöffnung 7 zugewandten Bereich, bevorzugt mit einem Radius a (bei kreisförmiger Gestaltung, ansonsten mit einem Größtmaß a) bezogen auf den geometrischen Mittelpunkt 8 der Durchgangsöffnung 7, welcher der radialen Erstreckung, oder einem 0,5- bis 1,5-Fachen der radialen Erstreckung, von einem, mehreren oder allen der oberseitig ausgebildeten Dehnbereiche 10 entspricht, nicht mit der Vlieslage 6 bedeckt ist. Wie ersichtlich, ist die Folie bevorzugt in diesem Bereich vielmehr freiliegend gestaltet. Es handelt sich auch um den Bereich, der als Manschettenbereich angesprochen werden kann. Also den Bereich des Dichtelementes 1 insgesamt, der im Wesentlichen (nur) im Einbauzustand durch Aufweitung und Anpassung etwa an ein Rohr wesentlichen Dehnungen unterworfen ist.

Die Schnittdarstellung der Figur 5 zeigt einen Querschnitt, versetzt nach radial außen zu dem Öffnungsrand 9 durch das Dichtelement, im Bereich von Dehnbereichen 10, jedoch im Wesentlichen quer hierzu verlaufend.

Bezüglich der Schnittdarstellung der Figur 6, nicht zur Erfindung gehörend, sind Unterbrechungsbereiche 11 (bezogen auf beide Außenflächen des Dichtelementes) zu erkennen, die entsprechend umlaufend vorgesehen sind.

Bei der Darstellung der Figur 6a, ebenfalls nicht zur Erfindung gehörend, handelt es sich um eine gegenüber der Ausführungsform der Figur 6 abweichend ausgebildete Ausführungsform. Hier ist nur oberseitig ein Unterbrechungsbereich 11 ausgebildet. Unterseitig ist dagegen, bei dem dargestellten Ausführungsbeispiel bevorzugt radial außen anschließend mit der radial äußeren Begrenzung eines Unterbrechungsbereiches 11, radial innen zum Unterbrechungsbereich 11 (der so unterseitig nicht vorgesehen ist) die Folienlage 4 freiliegend ausgebildet.

Bezüglich der Dehnbereiche 10 bei der Ausführungsform der Figur 3 ergibt sich in radialer Richtung vor dem Unterbrechungsbereich 11 in der Vlieslage 5 bzw. dem diesbezüglichen Bereich der Vlieslage 5 ein Abstandsbereich 15. Die Dehnbereiche 10 laufen in radialer Richtung ersichtlich nicht in den Unterbrechungsbereich 11 ein, sondern sind durch den Abstandsbereich 15 jeweils hiervon gesondert. Der Abstandsbereich 15 ist auch in Umfangsrichtung durchgehend in der Vlieslage 5 ausgebildet.

Die Einbausituation gemäß Figur 7 verdeutlicht die Dehnung des Dichtelementes 1 im Bereich des Öffnungsrandes 9 und des sich nach radial außen hierzu anschließenden Bereiches. Ersichtlich sind die Abmessungen des Dichtelementes 1 bevorzugt so vorgesehen, dass maximal über die radiale Erstreckung der Dehnbereiche 10, alternativ jedenfalls nicht über den Unterbrechungsbereich 11 hinaus, sich im Einbauzustand eine entsprechende Aufweitung ergibt.

Das Dichtelement 1 kann im Einbauzustand, wie aus Figur 7 ersichtlich, in üblicher Weise mit einer Abdichtungsmasse 14 überzogen werden. Aufgrund des Unterbrechungsbereiches 11 besteht keine Gefahr, dass etwa am Übergang zu dem Rohr 2 eindringende Feuchtigkeit nach radial außen über den Unterbrechungsbereich 11 hinaus wandern und durchziehen kann.

### Bezugszeichenliste:

- 1: Dichtelement
- 2: Rohr
- 3: Gebäudedecke
- 4: Folienlage
- 5: Vlieslage
- 6: Vlieslage
- 7: Durchgangsöffnung
- 8: Mittelpunkt
- 9: Öffnungsrand
- 10: Dehnbereich
- 11: Unterbrechungsbereich
- 12: Rand
- 13: Rand
- 14: Abdeckmasse
- 15: Abstandsbereich

- a: Radius/Größtmaß

## Patentansprüche

1. Flächiges Dichtelement (1), beispielsweise zum Abdichten eines Rohrdurchganges, bestehend aus einer ein- oder beidseitig zumindest teilweise mit einer eine Außenfläche des Dichtelementes (1) bildenden Vlieslage (5, 6) verbundenen dehnbaren Folienlage (4) und einer durch die Vlieslage (n) und die Folienlage (4) durchgehenden, vorzugsweise mittigen, einen Mittelpunkt (8) aufweisenden Durchgangsöffnung (7), **dadurch gekennzeichnet, dass** die Folienlage (4) an einer Radialen zu dem Mittelpunkt (8) orientiert einen oder mehrere Dehnbereiche (10) aufweist, in denen die Folienlage (4) freiliegt, d.h. sich jedenfalls frei von einer Bedeckung mit einer die Dehnbarkeit der Folienlage beeinträchtigenden Vlieslage erstreckt und dass sich in einer Umfangsrichtung, bezogen auf den Mittelpunkt, neben einem Dehnbereich ein Bereich der Folienlage anschließt, in welchem die Folienlage von der damit verbundenen Vlieslage überdeckt ist.

2. Flächiges Dichtelement (1) nach Anspruch 1, **dadurch gekennzeichnet, dass** die Durchgangsöffnung (7) einen Öffnungsrand (9) aufweist und dass die Folienlage (4) mit radialem Abstand zu dem Öffnungsrand (9) einen umfangsmäßig durchgehenden Unterbrechungsbereich (11) aufweist, in welchem sie freiliegt, d.h. sich jedenfalls frei von einer Bedeckung mit einer einen Flüssigkeitstransport begünstigenden Vlieslage erstreckt, wobei radial innen zu dem Unterbrechungsbereich (11) zumindest auf einem umfangsmäßigen Teil des Unterbrechungsbereiches die Folienlage (4) durch eine zur Begünstigung eines Flüssigkeitstransports geeignete Vlieslage (5, 6) überdeckt ist.

3. Flächiges Dichtelement (1) nach einem der vorhergehenden Ansprüche, **dadurch gekennzeichnet, dass** mehrere Dehnbereiche (10) vorgesehen sind und dass die Dehnbereiche (10) sternförmig zu dem Mittelpunkt (8) verlaufen.

4. Flächiges Dichtelement (1) nach einem der Ansprüche 2 oder 3, **dadurch gekennzeichnet, dass** einer, mehrere oder alle Dehnbereiche (10) in radialer Richtung vor dem Unterbrechungsbereich (11) enden.

5. Flächiges Dichtelement (1) nach Anspruch 4, **dadurch gekennzeichnet, dass** einer, mehrere oder alle Dehnbereiche (10) in radialer Richtung von dem Unterbrechungsbereich (11) durch einen von einer Vlieslage (5, 6) überdeckten Abstandsbereich der Folie getrennt sind.

6. Flächiges Dichtelement (1) nach Anspruch 5, **dadurch gekennzeichnet, dass** der Abstandsbereich (15) umlaufend geschlossen ausgebildet ist.

7. Flächiges Dichtelement (1) nach einem der Ansprüche 2 bis 6, **dadurch gekennzeichnet, dass** die Folienlage (4) radial jenseits des Unterbrechungsbereiches (11) vollständig von einer Vlieslage (5,6) überdeckt ist.

8. Flächiges Dichtelement (1) nach einem der vorhergehenden Ansprüche, **dadurch gekennzeichnet, dass** die Folienlage (4) eine Kunststoff-Folienlage ist.

## Claims

1. Planar sealing element (1), for example for sealing a pipe passage, consisting of an expansible film layer (4), which is connected, at least in part, on one or on both sides to a nonwoven layer (5, 6) that forms an external surface of the sealing element (1), and a preferably central through-opening (7) which passes through the nonwoven layer (n) and the film layer (4), and has a central point (8), **characterised in that** the film layer (4) comprises one or more expansion regions (10) on a radial oriented relative to the central point (8), in which regions the film layer (4) is exposed, i.e. in any case extends without being covered by a nonwoven layer that restricts the expansibility of the film layer, and **in that**, in a circumferential direction with respect to the central point, a region of the film layer in which the film layer is covered by the nonwoven layer connected thereto is provided next to an expansion region.

2. Planar sealing element (1) according to claim 1, **characterised in that** the through-opening (7) has an opening edge (9) and **in that** the film layer (4) comprises a circumferentially continuous break region (11) at a radial spacing from the opening edge (9), in which break region said layer is exposed, i.e. in any case extends without being covered by a nonwoven layer which facilitates the transport of liquid, the film layer (4) being covered by a nonwoven layer (5, 6), which is suitable for facilitating the transport of liquid, radially inside the break region (11), at least on a circumferential part of the break region.

3. Planar sealing element (1) according to any of the preceding claims, **characterised in that** a plurality of expansion regions (10) are provided, and **in that** the expansion regions (10) extend in the shape of a star relative to the central point (8).

4. Planar sealing element (1) according to either claim 2 or claim 3, **characterised in that** one, a plurality of or all the expansion regions (10) end before the break region (11) in the radial direction.

5. Planar sealing element (1) according to claim 4, **characterised in that** one, a plurality of or all the expansion regions (10) are separated from the break region (11) in the radial direction by a clearance region of the film that is covered by a nonwoven layer (5, 6).

6. Planar sealing element (1) according to claim 5, **characterised in that** the clearance region (15) is closed on all sides.

7. Planar sealing element (1) according to any of claims 2 to 6, **characterised in that**, the film layer (4) radially on the other side of the break region (11) is completely covered by a nonwoven layer (5, 6).

8. Planar sealing element (1) according to any of the preceding claims, **characterised in that** the film layer (4) is a plastics film layer.

## Revendications

1. Elément d'étanchéité surfacique (1), par exemple pour rendre étanche un passage de tuyau, constitué par une feuille extensible (4) liée d'un côté ou des deux au moins en partie à une couche de non-tissé (5, 6) formant une surface extérieure de l'élément d'étanchéité (1) et une ouverture de passage (7) de préférence centrale (7) qui présente un point central (8) et traverse la couche de non-tissé (n) et la feuille (4), **caractérisé en ce que** la feuille (4) présente une ou plusieurs zones extensibles (10) orientées radialement par rapport au point central (8) et dans lesquelles la feuille (4) est exposée, c'est-à-dire qui s'étend tout au moins libre de recouvrement par une couche de non-tissé restreignant l'extensibilité de la feuille, et **en ce que**, dans une direction circonférentielle par rapport au point central, il y a à côté d'une zone extensible une région contiguë de la feuille dans laquelle la feuille est couverte par la couche de non-tissé avec laquelle elle est liée.

2. Elément d'étanchéité surfacique (1) selon la revendication 1, **caractérisé en ce que** l'ouverture de passage (7) présente un bord d'ouverture (9) et **en ce que** la feuille (4) présente une région d'interruption (11) qui est continue circonférentiellement et distante radialement du bord d'ouverture (9) et dans laquelle elle est exposée, c'est-à-dire qui s'étend tout au moins libre de recouvrement par une couche de non-tissé favorisant le transport de fluide, dans lequel la feuille (4) est recouverte par une couche de non-tissé (5, 6) adaptée à favoriser le transport de fluide, radialement à l'intérieur de la région d'interruption au moins sur une partie circonférentielle de la région d'interruption.

3. Elément d'étanchéité surfacique (1) selon l'une des revendications précédentes, **caractérisé en ce que** plusieurs zones extensibles (10) sont prévues et **en ce que** les zones extensibles (10) s'étendent en étoile vers le point central (8).

4. Elément d'étanchéité surfacique (1) selon l'une des revendications 2 ou 3, **caractérisé en ce qu'**une, plusieurs ou toutes les zones extensibles (10) finissent dans la direction radiale devant la région d'interruption (11).

5. Elément d'étanchéité surfacique (1) selon la revendication 4, **caractérisé en ce qu'**une, plusieurs ou toutes les zones extensibles (10) sont séparées de la région d'interruption (11) dans la direction radiale par une région d'espacement recouverte d'une couche de non-tissé (5, 6).

6. Elément d'étanchéité surfacique (1) selon la revendication 5, **caractérisé en ce que** la région d'espacement (15) forme un contour fermé.

7. Elément d'étanchéité surfacique (1) selon l'une des revendications 2 à 6, **caractérisé en ce que** la feuille (4) est complètement recouverte par une couche de non-tissé (5, 6) radialement au-delà de la région d'interruption (11).

8. Elément d'étanchéité surfacique (1) selon l'une des revendications précédentes, **caractérisé en ce que** la feuille (4) est une feuille en matière plastique.
